# EUROPEAN PATENT SPECIFICATION

(11) **EP 4 293 689 B1**
(45) Date of publication and mention of the grant of the patent: **20.05.2026**
(21) Application number: 22178699.9
(22) Date of filing: 13.06.2022
(51) Int. Cl.: H01B 7/282

(54) **METHOD OF MANUFACTURING A POWER CABLE**
VERFAHREN ZUM HERSTELLEN EINES STROMKABELS
PROCÉDÉ DE FABRICATION D'UN CÂBLE D'ALIMENTATION

(43) Date of publication of application: 20.12.2023
(73) Proprietor: NKT HV Cables AB, 371 60 Lyckeby (SE)
(72) Inventor: ANTONISCHKI, Jörn, 371 94 Lyckeby (SE)
(74) Representative: Kransell & Wennborg KB

(56) References cited:
- EP-A1- 0 116 754
- EP-A1- 3 438 993
- EP-A1- 3 786 982
- WO-A1-2018/122572
- WO-A1-99/33070

## Description

### TECHNICAL FIELD

The present disclosure generally relates to power cables.

### BACKGROUND

Power cables comprise electric insulation to electrically insulate the conductor. A metallic radial water barrier is generally required to prevent moisture from penetrating into the insulation.

Conventionally, the metal used is lead, which is a soft, workable and extrudable metal. A lead moisture shield provides a safe barrier against water penetration but is associated with several disadvantages. For example, a lead moisture shield for use with high voltage cables requires a considerable sheath thickness. This results in a very heavy cable. Furthermore, lead is a toxic material that is hazardous both for humans and for the environment.

It is known to provide power cables with a water barrier in the form of a copper metal sheath that is joined by welding the longitudinal seam, as for example disclosed in EP 2 312 591, EP3 438 993, and EP 3 786 982.

### SUMMARY

Prior to welding, a metal sheet may be wrapped around the electrical insulation. Opposing edges of the metal sheet are longitudinally welded at a radial distance of about 1-7 mm from the directly underlying layer so as not to damage that layer, thus forming the metal sheath.

After the welding has been performed the metal sheath may be subjected to a diameter reduction process using rollers to decrease the distance between the directly underlying layer and the metal sheath. However, most metals usable for the particular application, such as copper, are harder than lead, which makes them less workable. Depending on the type of metal and the metal material thickness, it may be very challenging or even impossible to perform diameter reduction due to the force that would be required to be applied by the rollers. There is moreover a substantial risk of buckling of the metal material by performing diameter reduction, especially if the metal material is thin.

A general object of the present disclosure is to provide a power cable that solves or at least mitigates the problems of the prior art.

There is hence according to a first aspect of the present disclosure provided a method of manufacturing a power cable, comprising: a) providing a conductor, b) providing an insulation system comprising an inner semiconducting layer arranged around the conductor, an insulation layer arranged around the inner semiconducting layer, and an outer semiconducting layer arranged around the insulation layer, c) providing an elastic mechanical support layer around the outer semiconducting layer, d) compressing the mechanical support layer radially by means of a compression element, e) welding opposing edges of a metallic sheet arranged radially outside of the mechanical support layer longitudinally to form a metallic water blocking layer radially spaced apart from the mechanical support layer in the radially compressed state, and f) expanding the mechanical support layer by releasing the compression element from compressing the mechanical support layer, causing the mechanical support layer to support the metallic water blocking layer.

The support provided by the mechanical support layer on the metallic water blocking layer may be direct or indirect.

The mechanical support layer provides support of the metallic water blocking layer around the entire inner circumference of the metallic water blocking layer.

The mechanical support layer may fill up a majority of or all the radial space between the metallic water blocking layer and the outer semiconducting layer after expansion. The need to reduce the diameter of the metallic water blocking sheath may thereby be eliminated or the amount of diameter reduction required may at least be reduced. There may however, according to one example, be provided a layer of swelling tape radially inside the mechanical support layer, between the mechanical support layer and the outer semiconducting layer, and/or radially outside the mechanical support layer, between the mechanical support layer and the metallic water blocking layer.

Due to the elasticity of the mechanical support layer, the mechanical support layer can dynamically expand and contract to fill the radial gap/space between the outer semiconducting layer and the metallic water blocking layer as the insulation system thermally expands and contracts in response to the variation in the magnitude of the current that flows through the conductor during power cable operation. The mechanical properties of the power cable, including the centering of the conductor and insulation system may thus be maintained during power cable operation.

The mechanical support layer furthermore provides protection against longitudinal water ingression.

The power cable may be a medium voltage power cable or a high voltage power cable. With medium voltage is herein meant a voltage in the range of 1 kV-72.5 kV. With high voltage is herein meant a voltage above 72.5 kV.

The power cable may be a direct current (DC) power cable or an alternating current (AC) power cable. The AC power cable may be a single phase or multi-phase AC power cable. The DC power cable may comprise one, two, or more than two DC power cores or poles.

According to one embodiment the compression element is a cord or tape wound radially outside the mechanical support layer.

According to one embodiment the compression element comprises or consists of a polymer material.

According to one embodiment the polymer material is one of polypropylene, polyethylene, nylon, nomex^{®}, para-aramid, and biaxially-oriented polyethylene terephthalate.

According to one embodiment step f) involves heating the compression element such that it melts. The expanding may thus be triggered intentionally by heating.

According to one embodiment step f) involves decomposition of the compression element. The expanding may thus be a result of a natural process of decomposition of the compression element.

According to one embodiment the compression element comprises a biodegradable material such as cellulose-based fibre or polyhydroxyalkanoates, PHA.

According to one embodiment the mechanical support layer comprises a polymer foam or polymeric film layers with gas-filled bubbles provided between the polymeric film layers.

The polymeric film layers may for example comprise low density polyethylene (LDPE).

The gas may for example be air.

The polymer foam may for example comprise or consist of ethylene-vinyl acetate (EVA) foam, low-density polyethylene (LDPE), or polystyrene foam.

According to one embodiment the mechanical support layer is an extruded layer or is in the form of tape wrapped around the insulation system.

According to one embodiment the metallic water blocking layer comprises copper, aluminium, or stainless steel.

According to one embodiment the power cable is a submarine power cable.

According to one embodiment the mechanical support layer is semiconductive, providing an electrical connection between the outer semiconducting layer and the metallic water blocking layer.

There is according to a second aspect of the present disclosure provided a power cable obtainable by the method of the first aspect.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a cross section of an example of a power cable; and
Figs 2a-2d schematically shows cross sections of various steps of manufacturing a power cable; and
Fig 3 is a flowchart of a method of manufacturing a power cable such as the power cable in Fig. 1.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

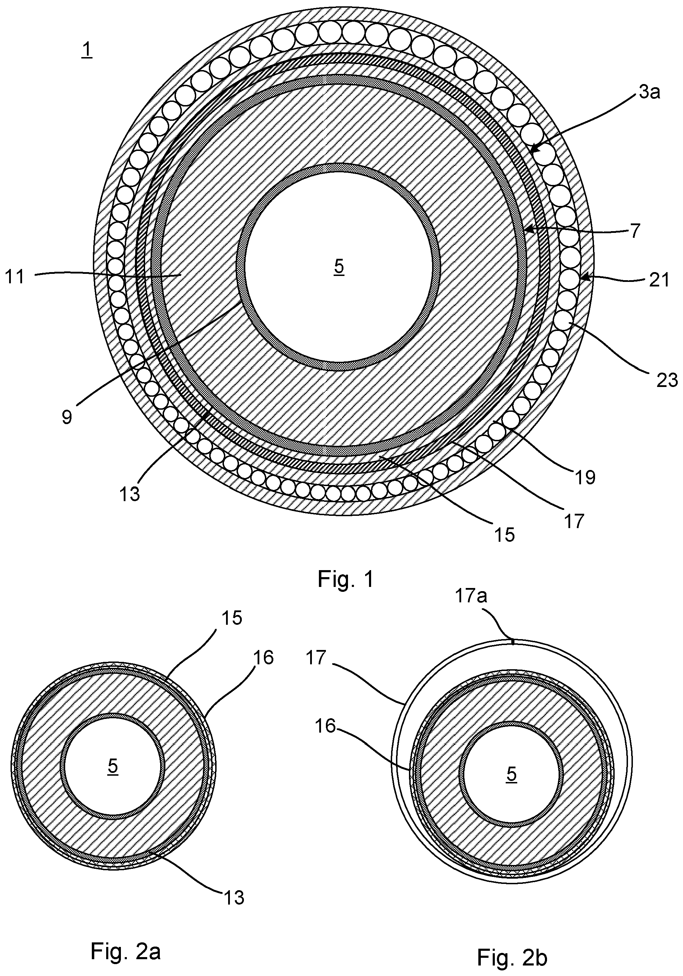

Fig. 1 schematically shows a cross section of an example of a power cable 1.

The power cable 1 comprises a power core 3a.

The power core 3a comprises a conductor 5. The conductor 5 may for example be solid, stranded, or of Milliken type. The conductor 5 is made of metal. The conductor 5 may for example comprise copper or aluminium.

The power core 3a comprises an insulation system 7.

The insulation system 7 comprises an inner semiconducting layer 9 arranged around the conductor 5. The inner semiconducting layer 9 may for example comprise crosslinked polyethylene (XLPE), polypropylene (PP), thermoplastic elastomer (TPE) which is based on PP random copolymer, ethylene propylene diene monomer (EPDM) rubber, or ethylene propylene rubber (EPR), mixed with a semiconductive component such as carbon black to form a semiconducting polymer, or a semiconducting paper. The semiconducting polymer may be extruded.

The insulation system 7 comprises an insulation layer 11. The insulation layer 11 is arranged around the inner semiconducting layer 9. The insulation layer 11 may be in direct contact with the inner semiconducting layer 9. The insulation layer 11 may for example comprise XLPE, PP, thermoplastic elastomer (TPE) which is based on PP random copolymer, EPDM rubber, or EPR, or paper. The insulation layer 11 may be extruded.

The insulation system 7 comprises an outer semiconducting layer 13 arranged around the insulation layer 11. The outer semiconducting layer 13 may be in direct contact with the insulation layer 11. The outer semiconducting layer 13 may for example comprise XLPE, PP, thermoplastic elastomer (TPE) which is based on PP random copolymer, EPDM rubber, or EPR, mixed with a semiconductive component such as carbon black to form a semiconducting polymer, or a semiconducting paper. The semiconducting polymer may be extruded.

The insulation system 7 may be a triple extruded insulation system.

The power core 3 comprises an elastic mechanical support layer 15 arranged radially outside of the outer semiconducting layer 13.

According to one example, the mechanical support layer 15 may be semiconducting.

The mechanical support layer 15 may for example comprise or consist of a polymer foam or polymeric film layers with gas-filled bubbles provided between the polymeric film layers.

In case the mechanical support layer 15 comprises or consists of polymer foam and is semiconducting, the polymeric material forming the polymer foam may be mixed with a semiconductive component such as carbon black to form a semiconducting polymer foam.

In case the mechanical support layer 15 comprises or consists of polymeric film layers with gas-filled bubbles provided between the polymeric film layers, the polymeric material forming the polymeric film layers may be mixed with a semiconductive component such as carbon black to form semiconducting polymeric film layers.

During manufacturing of the power cable 1, a compression element, such as a cord or tape, is provided around the mechanical support layer 15. The compression element is arranged to compress the mechanical support layer 15 radially. During manufacturing of the power cable 1, the compression element at a later stage of manufacturing releases the mechanical support layer 15 from being compressed. The mechanical support layer 15 is thus expanded radially. Traces of the compression element may be left around the mechanical support layer 15 after the mechanical support layer 15 has expanded. These traces may be found in the finished power cable 1 product.

The power core 3a comprises a metallic water blocking layer 17. The metallic water blocking layer 17 is arranged concentrically with and around the mechanical support layer 15.

The mechanical support layer 15 is arranged between the outer semiconducting layer 13 and the metallic water blocking layer 17.

The mechanical support layer 15 mechanically supports the metallic water blocking layer 17.

The mechanical support layer 15 may for example be an extruded layer, or it may be in the form of tape wrapped around the insulation system 7.

The metallic water blocking layer 15 may comprise a metal sheath. The metal may for example be aluminium, an aluminium alloy, copper, a copper alloy, or stainless steel.

The power core 3a comprises a polymer layer 19 arranged concentrically with and around the metallic water blocking layer 17. The polymer layer 19 may for example comprise XLPE, PP, EPDM or EPR.

The polymer layer 19 may be semiconducting.

According to one example, the polymer layer 19 may be bonded to the metallic water blocking layer 17 by means of glue. The glue is semiconducting if the polymer layer 19 is semiconducting.

The polymer layer 19 may be a polymer jacket.

The polymer layer 19 may be in direct contact with the outer surface of the metallic water blocking layer 17.

The polymer layer 19 may be extruded onto the metallic water blocking layer 17.

The power cable 1 may comprise an armour layer 21 arranged radially outside of the polymer layer 19.

The armour layer 21 comprises a plurality of armour wires 23 arranged helically around the polymer layer 19. The armour layer 21 may comprise armour wires 23 made of metal such as galvanized carbon steel, austenitic stainless steel, copper, or aluminium, and/or armour wires 23 made of synthetic material such as aramid fibres in a jacket.

In case at least some of the armour wires 23 are made of metal, the armour layer 21 may be covered in bitumen.

Figs 2a-2d show exemplary production steps for manufacturing the power cable 1.

In the example in Fig. 2a, the mechanical support layer 15 is provided around the outer semiconducting layer 13.

The metallic water blocking layer 17 has not yet been arranged around the mechanical support layer 15 at this stage.

The mechanical support layer 15 may for example be in the form of tape that is wrapped around the insulation system 7 or it may be extruded onto the insulation system 7. Facing edges of the tape may be bonded to each other, for example by means of adhesive.

Fig. 2a further illustrates that the compression element 16 is provided around the mechanical support layer 15. The compression element 16 compresses the mechanical support layer 15 radially.

The compression element 16 may for example be a tape or a cord that is wound helically around the mechanical support layer 15 tightly to compress the mechanical support layer 15 radially substantially.

The combined radial thickness of the compressed mechanical support layer 15 and the compression element 16 is preferably substantially smaller than the radial dimension of the mechanical support layer 15 in a non-compressed state. The combined radial thickness of the compressed mechanical support layer 15 and the compression element 16 may for example be less than half the radial dimension of the mechanical support layer 15 in a non-compressed state.

The compression element 16 may for example comprise or consist of a polymer material that has a melting point in a range of 100-400°C. Examples of suitable polymer materials are polypropylene, polyethylene, nylon, nomex^{®}, para-aramid, and biaxially-oriented polyethylene terephthalate.

According to another example, the compression element 16 comprises or consists of a biodegradable material such as cellulose-based fibre, polyhydroxyalkanoates, or Bioska^{®} material.

Fig. 2b illustrates when the metallic water blocking layer 17 has been formed around the mechanical support layer 15 which is still compressed by the compression element 16.

The metallic water blocking layer 17 has been made by wrapping a metallic sheet around the compression element 16 at a radial distance from the compression element 16. Opposing edges of the metallic water blocking layer 17 have been welded longitudinally to form the weld seam 17a.

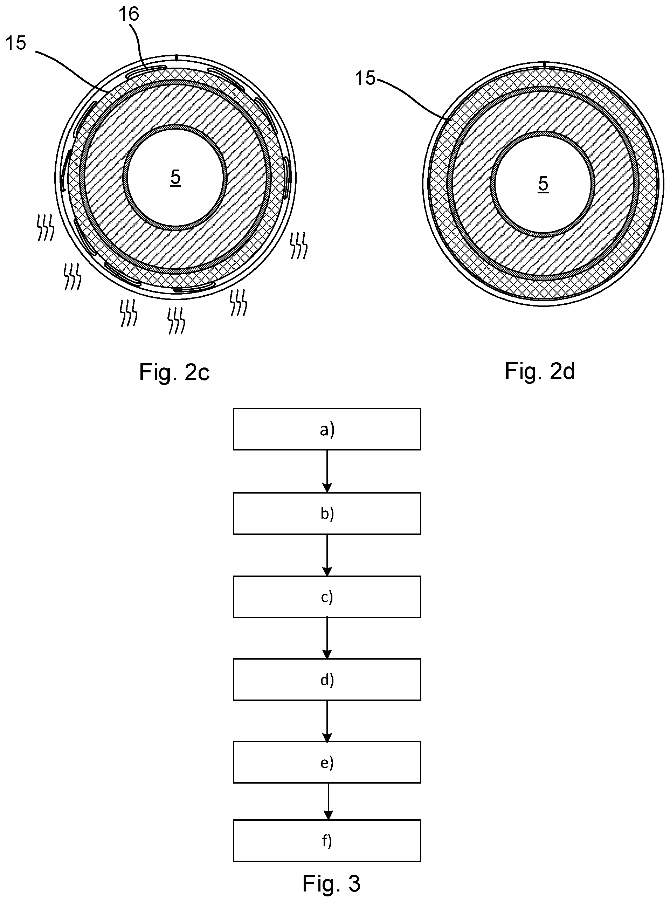

Fig. 2c shows when the structure obtained in Fig. 2b is subjected to heat treatment. This causes the compression element 16 to melt and disintegrate. The mechanical support layer 15 is thus allowed to expand to its naturally expanded state.

As an alternative to the heat treatment, the compression element 16 may decompose naturally if it is made of suitable biodegradable material. In this case, no external triggering, such as heating, for expanding the mechanical support layer 15 may be required.

Fig. 2d shows when the heat treatment has been completed. The mechanical support layer 15 is in the example in direct contact with the inner surface of the metallic water blocking layer 17.

According to one variation, the metallic water blocking layer 17 may be subjected to a diameter reduction before or after the heat treatment to ensure that the mechanical support layer 15 is in direct contact with the inner surface of the metallic water blocking layer 17.

Fig. 3 is a flowchart of a method of manufacturing the power cable 1.

In a step a) the conductor 5 is provided.

In a step b) the insulation system 7 is provided around the conductor 5. The insulation system 7 may for example be provided around the conductor 5 in a triple extrusion process or in a tape winding process.

In a step c) the mechanical support layer 15 is provided around the outer semiconducting layer 13 of the insulation system 7.

The mechanical support layer 15 may be extruded onto the insulation system 7 in step c) or it may be folded or wound around the insulation system 7 in the form of a tape.

In a step d) the mechanical support layer 15 is compressed radially by means of the compression element 16. The compression element 16 may for example be wound around the mechanical support layer 15 to provide compression of the mechanical support layer 15.

In a step e) the opposing edges of a metallic sheet are welded longitudinally to form the metallic water blocking layer 17 around the compression element 16.

In a step f) the mechanical support layer 15 is expanded radially by releasing the compression element 16 from compressing the mechanical support layer 15.

Step f) may for example involve heating the metallic water blocking layer 17, e.g., by means of induction heating, or a heating element. The compression element 16 is thus heated such that it softens or melts. This allows the compression element 16 to expand radially such that it radially supports the metallic water blocking layer 17.

If the compression element 16 comprises or consists of biodegradable material, the compression element 16 will decompose with time allowing the mechanical support layer 15 to expand radially such that it radially supports the metallic water blocking layer 17. The biodegradable material should be selected such that the compression element 16 decomposes quickly, preferably when the power cable 1 is still in the factory.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A method of manufacturing a power cable, comprising:
a) providing a conductor (5),
b) providing an insulation system (7) comprising an inner semiconducting layer (9) arranged around the conductor (5), an insulation layer (11) arranged around the inner semiconducting layer (9), and an outer semiconducting layer (13) arranged around the insulation layer (11),
c) providing an elastic mechanical support layer (15) around the outer semiconducting layer (13),
d) compressing the mechanical support layer radially by means of a compression element (16),
e) welding opposing edges of a metallic sheet arranged radially outside of the mechanical support layer longitudinally to form a metallic water blocking layer (17) radially spaced apart from the mechanical support layer in the radially compressed state, and
f) expanding the mechanical support layer (15) by releasing the compression element (16) from compressing the mechanical support layer (15), causing the mechanical support layer (15) to support the metallic water blocking layer (17).

2. The method as claimed in claim 1, wherein the compression element (16) is a cord or tape wound radially outside the mechanical support layer (15).

3. The method as claimed in any of the preceding claims, wherein the compression element (16) comprises or consists of a polymer material.

4. The method as claimed in claim 3, wherein the polymer material is one of polypropylene, polyethylene, nylon, nomex^{®}, para-aramid, and biaxially-oriented polyethylene terephthalate.

5. The method as claimed in any of the preceding claims, wherein step f) involves heating the compression element (16) such that it melts.

6. The method as claimed in any of claims 1-3, wherein step f) involves decomposition of the compression element (16).

7. The method as claimed in claim 6, wherein the compression element comprises a biodegradable material such as cellulose-based fibre or polyhydroxyalkanoates, PHA.

8. The method as claimed in any of the preceding claims, wherein the mechanical support layer (15) comprises a polymer foam or polymeric film layers with gas-filled bubbles provided between the polymeric film layers.

9. The method as claimed in any of the preceding claims, wherein the mechanical support layer (15) is an extruded layer or is in the form of tape wrapped around the insulation system (7).

10. The method as claimed in any of the preceding claims, wherein the metallic water blocking layer (17) comprises copper, aluminium, or stainless steel.

11. The method as claimed in any of the preceding claims, wherein the power cable (1) is a submarine power cable.

12. The method as claimed in any of the preceding claims, wherein the mechanical support layer (15) is semiconductive, providing an electrical connection between the outer semiconducting layer (13) and the metallic water blocking layer (17).

13. A power cable (1) obtainable by the method of any of the preceding claims.

## Patentansprüche

1. Verfahren zum Herstellen eines Stromkabels, umfassend:
a) Bereitstellen eines Leiters (5),
b) Bereitstellen eines Isolationssystems (7), umfassend eine innere Halbleiterschicht (9), die um den Leiter (5) angeordnet ist, eine Isolierschicht (11), die um die innere Halbleiterschicht (9) angeordnet ist, und eine äußere Halbleiterschicht (13), die um die Isolierschicht (11) angeordnet ist,
c) Bereitstellen einer elastischen mechanischen Stützschicht (15) um die äußere Halbleiterschicht (13),
d) Komprimieren der mechanischen Stützschicht in radialer Richtung mittels eines Kompressionselements (16),
e) Schweißen gegenüberliegender Ränder eines Metallblechs, das radial außerhalb der mechanischen Stützschicht in Längsrichtung angeordnet ist, um eine metallische Wassersperrschicht (17) auszubilden, die im radial komprimierten Zustand radial von der mechanischen Stützschicht beabstandet ist, und
f) Dehnen der mechanischen Stützschicht (15) durch Lösen des Kompressionselements (16) vom Zusammendrücken der mechanischen Stützschicht (15), wodurch die mechanische Stützschicht (15) die metallische Wassersperrschicht (17) stützt.

2. Verfahren nach Anspruch 1, wobei das Kompressionselement (16) eine Schnur oder ein Band ist, das radial außerhalb der mechanischen Stützschicht (15) gewickelt ist.

3. Verfahren nach einem der vorhergehenden Ansprüche, wobei das Kompressionselement (16) ein Polymermaterial umfasst oder aus diesem besteht.

4. Verfahren nach Anspruch 3, wobei das Polymermaterial eines der folgenden Materialien ist: Polypropylen, Polyethylen, Nylon, Nomex^{®}, Para-Aramid und biaxial orientiertes Polyethylenterephthalat.

5. Verfahren nach einem der vorhergehenden Ansprüche, wobei Schritt f) das Erhitzen des Kompressionselements (16) einschließt, sodass es schmilzt.

6. Verfahren nach einem der Ansprüche 1-3, wobei der Schritt f) die Zersetzung des Kompressionselements (16) einschließt.

7. Verfahren nach Anspruch 6, wobei das Kompressionselement ein biologisch abbaubares Material, wie etwa eine Faser auf Zellulosebasis oder Polyhydroxyalkanoate, PHA, umfasst.

8. Verfahren nach einem der vorhergehenden Ansprüche, wobei die mechanische Stützschicht (15) einen Polymerschaum oder Polymerfolienschichten mit gasgefüllten Blasen umfasst, die zwischen den Polymerfolienschichten bereitgestellt sind.

9. Verfahren nach einem der vorhergehenden Ansprüche, wobei die mechanische Stützschicht (15) eine extrudierte Schicht ist oder in Form eines Bandes um das Isoliersystem (7) gewickelt ist.

10. Verfahren nach einem der vorhergehenden Ansprüche, wobei die metallische Wassersperrschicht (17) Kupfer, Aluminium oder Edelstahl umfasst.

11. Verfahren nach einem der vorhergehenden Ansprüche, wobei das Stromkabel (1) ein Unterwasserstromkabel ist.

12. Verfahren nach einem der vorhergehenden Ansprüche, wobei die mechanische Stützschicht (15) halbleitend ist und eine elektrische Verbindung zwischen der äußeren Halbleiterschicht (13) und der metallischen Wassersperrschicht (17) bereitstellt.

13. Stromkabel (1), das durch das Verfahren nach einem der vorhergehenden Ansprüche erhalten werden kann.

## Revendications

1. Procédé de fabrication d'un câble d'alimentation, comprenant :
a) la fourniture d'un conducteur (5),
b) la fourniture d'un système d'isolation (7) comprenant une couche semi-conductrice intérieure (9) agencée autour du conducteur (5), une couche d'isolation (11) agencée autour de la couche semi-conductrice intérieure (9), et une couche semi-conductrice extérieure (13) agencée autour de la couche d'isolation (11),
c) la fourniture d'une couche de support mécanique élastique (15) autour de la couche semi-conductrice extérieure (13),
d) la compression de la couche de support mécanique radialement au moyen d'un élément de compression (16),
e) le soudage de bords opposés d'une feuille métallique agencée radialement à l'extérieur de la couche de support mécanique longitudinalement pour former une couche métallique de blocage d'eau (17) espacée radialement de la couche de support mécanique dans l'état compressé radialement, et
f) l'expansion de la couche de support mécanique (15) par la libération de l'élément de compression (16) de la compression de la couche de support mécanique (15), amenant la couche de support mécanique (15) à supporter la couche métallique de blocage d'eau (17) .

2. Procédé selon la revendication 1, dans lequel l'élément de compression (16) est un cordon ou un ruban enroulé radialement à l'extérieur de la couche de support mécanique (15).

3. Procédé selon l'une quelconque des revendications précédentes, dans lequel l'élément de compression (16) comprend ou est constitué d'un matériau polymère.

4. Procédé selon la revendication 3, dans lequel le matériau polymère est l'un parmi propylène, polyéthylène, nylon, nomex^{®}, para-aramide et polyéthylène téréphtalate à orientation biaxiale.

5. Procédé selon l'une quelconque des revendications précédentes, dans lequel l'étape f) implique le chauffage de l'élément de compression (16) de sorte qu'il fonde.

6. Procédé selon l'une quelconque des revendications 1 à 3, dans lequel l'étape f) implique une décomposition de l'élément de compression (16).

7. Procédé selon la revendication 6, dans lequel l'élément de compression comprend un matériau biodégradable tel qu'une fibre à base de cellulose ou des polyhydroxyalcanoates, PHA.

8. Procédé selon l'une quelconque des revendications précédentes, dans lequel la couche de support mécanique (15) comprend une mousse polymère ou des couches de film polymère avec des bulles remplies de gaz fournies entre les couches de film polymère.

9. Procédé selon l'une quelconque des revendications précédentes, dans lequel la couche de support mécanique (15) est une couche extrudée ou se présente sous la forme d'un ruban enroulé autour du système d'isolation (7).

10. Procédé selon l'une quelconque des revendications précédentes, dans lequel la couche métallique de blocage d'eau (17) comprend du cuivre, de l'aluminium ou de l'acier inoxydable.

11. Procédé selon l'une quelconque des revendications précédentes, dans lequel le câble d'alimentation (1) est un câble d'alimentation sous-marin.

12. Procédé selon l'une quelconque des revendications précédentes, dans lequel la couche de support mécanique (15) est semi-conductrice, assurant une liaison électrique entre la couche semi-conductrice extérieure (13) et la couche métallique de blocage d'eau (17).

13. Câble d'alimentation (1) pouvant être obtenu par le procédé selon l'une quelconque des revendications précédentes.
